# EUROPEAN PATENT SPECIFICATION

(11) **EP 3 229 933 B1**
(45) Date of publication and mention of the grant of the patent: **10.10.2018**
(21) Application number: 15841082.9
(22) Date of filing: 04.12.2015
(51) Int. Cl.: B01D 19/00, B01D 21/24, B01D 21/26

(54) **SEPARATOR AND METHOD**
SEPARATOR UND VERFAHREN
SÉPARATEUR ET PROCÉDÉ

(30) Priority: 08.12.2014 NL 2013941
(43) Date of publication of application: 18.10.2017
(73) Proprietor: Flamco B.V., 3751 LJ Bunschoten (NL)
(72) Inventor: CNOSSEN, Jan, Henk, 8723 CP Koudum (NL); DEVLIN, Terence, Arthur, 7312 AP Apeldoorn (NL); HOENDERKAMP, Erik, Johannes, 3601 DJ Maarssen (NL)
(74) Representative: Haan, Raimond
(86) International application number: PCT/NL2015/050844
(87) International publication number: WO 2016/093694

(56) References cited:
- DE-A1- 10 201 916
- US-A1- 2005 077 248
- US-A1- 2009 020 467
- US-B1- 6 730 222

## Description

The invention relates to a separator for separating gas and/or solid material particles from a fluid flow and to a method for separating solid particles from a fluid flow.

Gas separators are utilized to degas systems of gases. Such formation of gas can occur during filling or be released from a solution flowing through the system. In addition, an underpressure in the system can, together with leakages, cause air to be drawn in.

An example of such a gas separator is an air separator, or venting device, provided in a heating system or cooling system in order to prevent air bubbles in the pipes of the system. Such an air separator has been marketed by Applicant since the 1960s under the name Flexair©. The Flexair© air separators are particularly suitable for application in heating and cooling installations with high liquid speeds. The water in the Flexair© air separator is set into rotation by tangentially arranged connections. As a result of the centrifugal action of the rotating water the heavier medium 'water' will be pressed against the wall, while the lighter medium 'air' will accumulate in the axis of the air separator and can be discharged therefrom, for instance using a float vent likewise developed and marketed commercially by Applicant. Air can in this way be separated from a heating or cooling system using the Flexair© separator.

A drawback of the Flexair© air separator is that the heavier medium which is pressed against the wall in addition to water by the centrifugal action generally contains contaminants. Contaminants can enter the system during installation and during operation of the system. Contaminants which have entered the system during installation comprise for instance sand, shavings and welding residues. Contaminants can enter the system during operation when the liquid with which the system is filled comprises contaminants (for instance contaminated replenishing water), or when formation of limescale or corrosion takes place. Such contaminants are detrimental to the reliability and efficiency of the heating or cooling system in which the air separator is incorporated.

An excessive amount of gas (air) and contaminants can cause multiple drawbacks. A first consequence of accumulated contaminants is a local mass increase which can result in a vibration of the system. This vibration is accompanied by an undesired generation of noise and will have an adverse effect on the lifespan. A second consequence is the formation of corrosion. This corrosion can result on the one hand in further contaminants which can clog heat exchangers in the system and can cause friction on moving parts. Corrosion can result on the other hand in erosion on pressure-generating parts, whereby tolerances on these parts can exceed the desired specifications. A third consequence is a reduced heat transfer of radiators, and a fourth consequence is formed by an increased energy consumption.

It is usual to provide a heating system or cooling system with means for removing undesired gas (air) and contaminants from the system. Because gas and solids are removed in different ways, different types of system are utilized for this purpose.

Gases can be removed by allowing them, as a result of their low specific weight, to accumulate above a liquid solution, from where they can be discharged using a valve. A low throughflow speed is required in order to obtain sufficient time for discharge via the valve. Separation from the liquid solution of the gas dissolved therein can be enhanced by increasing the temperature of the liquid solution and/or reducing the pressure.

Solids can be removed from a system by means of filters, which have the drawback that they considerably increase the flow resistance and result in a pressure drop. In addition, filters require frequent maintenance and have to be cleaned and/or replaced periodically. Another way of capturing solids is by making use of the relatively high specific weight of the solid particles. Heavy particles can for instance settle in a flow zone with low flow speed.

Because gases and solids behave so differently, heating or cooling systems are generally provided with a gas separator and a separate solids separator.

US-A1-2009/0020467 is acknowledged as the closest prior art, and at least the features of the characterizing part are new in view of this document. The documents US-A1-2005/0077248, DE-A1-102 01 916 and US-B1-6,730,222 are acknowledged as further prior art.

US-B1-6,730,222 shows a hydrodynamic vortex separator suitable for separating both settleable material and floatable material from a liquid flow. When a medium of liquid, solid material and floatable material enters an inlet chamber via an inlet during normal use, this medium flows against a baffle which divides the inlet chamber into two zones. Possible solid particles colliding with this baffle lose their speed and will settle under the influence of gravity. The medium flows via a downward sloping inlet chute into a lower part of the separator, and a rotating flow is generated here which displaces the heavier (solid) particles outward in the direction of the outer wall under the influence of the centrifugal force. A relatively rapid rotational flow is created close to the outer wall in the lower part, and a relatively slow rotational flow closer to the central axis of the separator. Heavy (solid) particles collide with the wall because of the centrifugal action and are collected in a collection trough. Floatable material will rise and, via an opening between an upper wall and a tubular member, eventually enter a chamber in which the floatable material collects. Liquid medium will flow via openings into the tubular member and subsequently flow via the tubular member to an outlet port. Inside the vessel the separator of US-B1-6,730,222 has a complex construction of baffles for regulating the flow. As a result of this complex construction manufacture is time-consuming and requires a relatively large amount of material. The separator further requires relatively frequent maintenance and is relatively susceptible to failure. The baffles further have an adverse effect on the flow resistance.

The invention now has for its object to provide a separator wherein said drawbacks do not occur, or at least do so to lesser extent.

Said object is achieved according to the invention with the separator for separating gas and/or solid material particles from a fluid flow, as defined in claim 1.

The fluid supply conduit extends through the fluid supply opening and comprises within the volume enclosed by the vessel a supply pipe bend which deflects the fluid flow in the peripheral direction of the vessel. The pipe bend facilitates startup of a circulation which creates a vortex in the medium. The circulation of the fluid flow exerts a centrifugal action on the relatively heavy solid particles, which thereby displace in outward direction toward the peripheral wall of the vessel. The centrifugal action also causes a lower pressure at the central axis, i.e. the rotational symmetry axis of the vessel. Gas bubbles present in the medium will move toward the central axis of the vessel.

The fluid discharge conduit extends through the fluid discharge opening and comprises within the volume enclosed by the vessel a discharge pipe bend having a discharge inlet opening oriented downward to a limited extent in the direction of the bottom of the vessel. The discharge pipe bend influences the circulating fluid flow, and curving this pipe bend downward to a limited extent results in a separator which provides a substantially upright axis of the vortex, i.e. of the circulating fluid flow, for fluid flow velocities in the practical range of 0.5 m/s - 6 m/s.

The fluid supply opening and fluid discharge opening are arranged in the peripheral wall at positions substantially opposite each other. Because the fluid supply and fluid discharge conduits are arranged at substantially the same height in the vessel, and can thereby lie substantially in a straight line, the conduit path is only interrupted, but a displacement of conduits is unnecessary. The separator is hereby easy to arrange in an existing fluid conduit. It is advantageous that the separator allows for use in a continuous (i.e. 'in-line') configuration in heating or cooling systems. It is noted that by curving the supply pipe bend in peripheral direction and curving the discharge pipe bend downward they together define in elegant manner and without application of (guide) baffles a main zone in which the vortex will begin to flow. The interior of the vessel of the separator can hereby be largely free of baffles which obstruct flow and serve to set the flow into rotation. The construction is moreover simple and low-maintenance because there are substantially no blind areas where dirt can accumulate. The separator is in addition easy to clean owing to the open space.

The capturing member extending in height direction along the peripheral wall of the vessel forms an obstacle to solid particles which have been displaced outward to a position close to the peripheral wall by the centrifugal action. As soon as these solid particles collide with the capturing member, they will be slowed down considerably, whereby they drop downward under the influence of gravity. It is particularly advantageous that, in addition to separating solid particles, the separator according to the invention can also separate gas bubbles. A low pressure, toward which gas bubbles present in the fluid flow will begin to move, will prevail close to the central axis of the vessel, i.e. the rotational symmetry axis of the vessel around which the fluid flow circulates. The gas bubbles will eventually accumulate on the upper side of the vessel, toward which they will move as a result of their relatively low density, and from where they can be discharged if desired. The separator according to the invention hereby provides a single device which can separate both gas and solid particles. An 'in-line' disposition is possible, as are high throughflow speeds. In addition, there is only a very limited pressure drop over the separator.

According to a preferred embodiment, the supply pipe bend is curved in a first peripheral direction and this supply pipe bend deflects the fluid flow in the first peripheral direction of the vessel, and wherein the discharge pipe bend is curved in a second peripheral direction, wherein the second peripheral direction is opposite to the first peripheral direction of the supply pipe bend and the fluid flow. Because the discharge pipe bend is curved in a second peripheral direction as seen in peripheral direction of the vessel, which is opposite to the first peripheral direction in which the supply pipe bend is curved, the discharge pipe bend is situated in an optimal orientation for discharging the fluid flow from the vessel. This is because the fluid flow circulates in a direction imposed by the supply pipe bend, and thereby arrives in optimal manner close to the discharge pipe bend.

The capturing member comprises a strip part arranged on or close to the peripheral wall and extending some distance inward into the vessel from the peripheral wall. The strip part hereby forms an obstacle to the solid particles moving along the peripheral wall, which will collide with the strip part of the capturing member and will thereby drop downward in the direction of the bottom of the vessel.

According to a further preferred embodiment, the capturing member further comprises a plate part connecting to the side of the strip part remote from the peripheral wall. During use the fluid flow will circulate through the vessel. The plate part of the capturing member extends from the strip part in upstream direction, whereby the strip part and plate part enclose together with the peripheral wall of the vessel a capture volume of the capturing member.

According to yet another preferred embodiment, the plate part is arranged extending obliquely from the peripheral wall away from the strip part.

According to yet another preferred embodiment, the separator further comprises a screen member arranged some distance above the bottom of the vessel. The screen member causes a downward flow behind the screen member and the scraper member and thereby divides the vessel into a high-flow zone above the screen member and a low-flow zone below the screen member. The low-flow zone close to the bottom of the vessel has the advantage that, once they have entered this low-flow zone, solid particles will remain out of reach of the centrifugal flow present in the high-flow zone, whereby the risk of resuspension of these solid particles is eliminated.

According to yet another preferred embodiment, the screen member comprises a substantially lying plate part. This plate part on the one hand has a sufficiently large surface area to form a separation between the high-flow upper zone and low-flow lower zone, but on the other hand leaves sufficient space on the peripheral wall to allow solid particles to move unobstructed in the direction of the bottom of the vessel.

According to yet another preferred embodiment, the screen member is arranged obliquely in the vessel, so that it deflects the fluid flow F in upward direction. Because the circulating fluid flow F is deflected a low-flow zone is obtained below the screen member.

According to yet another preferred embodiment, the screen member is disposed at an angle α in the range of 5°-35° relative to the transverse direction of the vessel. When the vessel is mounted the transverse direction is substantially horizontal and the angle α is defined relative to the horizontal plane H.

Although it is possible to envisage the direction of inclination of an obliquely disposed screen member changing close to the central axis of the vessel in order to guarantee that the fluid flow - which is circulating - is deflected in upward direction over the whole peripheral direction, it suffices according to a further preferred embodiment for the screen member to extend inward from a position close to the capturing member to a position close to the central axis of the vessel.

According to yet another preferred embodiment, the screen member extends inward from a position close to the capturing member to a maximum of 25% of the radius beyond the central axis of the vessel. When the capturing member extends to a limited extent beyond the central axis of the vessel, it provides a screening which, as will be further elucidated below, prevents a pipe bend arranged on the fluid discharge opening being able to draw in and cause resuspension of contaminants present in the low-flow zone.

According to an alternative embodiment, the screen member substantially comprises a disc, wherein an opening is provided at least between the plate part connected to the capturing member and the peripheral wall. There is a clearance of several centimetres between the peripheral wall and the disc, and this can enhance the flow. Perforations which allow contaminants to drop to the low-flow zone can optionally be provided in the disc. The opening between the plate part connected to the capturing member and the peripheral wall ensures that solid particles colliding with the capturing member can drop downward.

According to a further preferred embodiment, the disc extends to a position some distance from the peripheral wall of the vessel. With the exception of a possible connection for the positioning, the disc can be arranged such that it has some clearance substantially all the way around to the peripheral wall of the vessel.

According to yet another preferred embodiment, the capturing member and the screen member are arranged substantially connecting to each other. This disposition provides an optimal protection between the high-flow zone located above the screen member and the low-flow zone located below the screen member.

Structural stiffness is obtained when according to yet another preferred embodiment the capturing member and the screen member are connected to each other.

It is particularly advantageous according to yet another preferred embodiment for the capturing member and the screen member to form a monolithic unit.

According to yet another preferred embodiment, an upper screen with a passage opening is provided between the fluid supply opening and the upper side of the vessel. The circulation of the fluid flow is enhanced by the upper screen, i.e. the upper screen contributes toward the generation of a vortex. The passage opening arranged in the upper screen serves to ensure a free passage for gas bubbles to the upper side of the vessel. The upper screen can for instance be a ring extending inward from the peripheral wall of the vessel.

According to yet another preferred embodiment, the capturing member and the upper screen are arranged substantially connecting to each other, and wherein the capturing member and the upper screen are preferably connected to each other.

According to yet another preferred embodiment, the capturing member and the upper screen form a monolithic unit.

According to yet another preferred embodiment, the separator further comprises a solid particle discharge opening which is arranged in or close to the bottom and through which solid particles collected on or close to the bottom can be discharged.

According to yet another preferred embodiment, the bottom is provided with a solid particle collection zone in which the solid particle discharge opening is arranged.

According to yet another preferred embodiment, the separator further comprises a scraper member displaceable over the bottom for scraping off solid particles present on the bottom.

According to yet another preferred embodiment, the separator further comprises
- a guide which extends in the solid particle collection zone and through which a magnet is displaceable between an attracting position and a release position,
- wherein in the attracting position the magnet is located substantially within the solid particle collection zone and attracts magnetizable solid particles S_{M} against the guide; and
- wherein in the release position the magnet is located at least partially in the guide and substantially outside the solid particle collection zone, and the magnetizable solid particles S_{M} are removed substantially so far from the magnet that they are no longer attracted against the guide and drop into the solid particle collection zone.

According to yet another preferred embodiment, the above described embodiment lacks a capturing member extending in height direction along the peripheral wall of the vessel. The measures of a separator with a guide which extends in the solid particle collection zone and through which a magnet is displaceable between an attracting position and a release position as described above can also be implemented independently.

The invention further relates to a method for separating solid particles from a fluid flow using the claimed separator, comprising the steps of:
- generating a circulating fluid flow in a vessel between a fluid supply opening and a fluid discharge opening, wherein the fluid supply opening and the fluid discharge opening are arranged at positions substantially opposite each other in a peripheral wall of the vessel, wherein a fluid supply conduit extends through the fluid supply opening and comprises within the volume enclosed by the vessel a supply pipe bend which deflects the fluid flow in the peripheral direction of the vessel, and wherein a fluid discharge conduit extends through the fluid discharge opening and comprises within the volume enclosed by the vessel a discharge pipe bend having a discharge inlet opening oriented downward to a limited extent in the direction of the bottom of the vessel;
- capturing solid particles, displaced outward by centrifugal action to a position close to the peripheral wall of the vessel, using a capturing member extending in height direction along the peripheral wall; and
- collecting close to a bottom of the vessel the solid particles captured by the capturing member.

According to a preferred embodiment of the method, the supply pipe bend curves in a first peripheral direction and thereby deflects the fluid flow in this first peripheral direction of the vessel, and wherein the discharge pipe bend curves in a second peripheral direction, wherein the second peripheral direction is opposite to the first peripheral direction of the supply pipe bend and the fluid flow. The discharge pipe bend hereby has an optimal orientation for receiving the circulating fluid flow.

According to a further preferred embodiment of the method, a separator as described in the foregoing is applied.

Preferred embodiments of the present invention are further elucidated in the following description with reference to the drawing, in which:
Figure 1 is a schematic view of a heating or cooling system provided with a separator according to the invention;
Figure 2 is a perspective view of the separator shown in figure 1;
Figure 3 is a partially cut-away perspective view of the separator shown in figure 2;
Figure 4 is a cross-sectional top view of the separator shown in figures 2 and 3;
Figure 5 is a perspective cross-sectional view of the separator shown in figures 2-4;
Figure 6 is a cross-section through the underside shown in figure 5 in a first situation;
Figure 7 is a cross-section through the underside shown in figure 5 in a second situation;
Figure 8 is a cross-sectional top view of a separator with an alternative screen member; and
Figures 9 and 10 are perspective views of a further preferred embodiment.

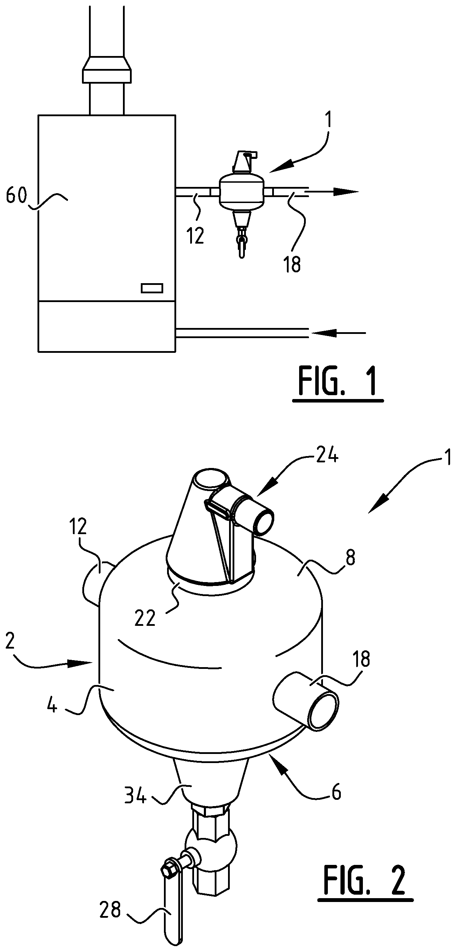

Figure 1 shows a heating or cooling unit 60 from which a fluid supply conduit 12 supplies fluid to a separator 1. A fluid discharge conduit 18 discharges the fluid F from separator 1 once separator 1 has separated solid particles S and gas bubbles G therefrom.

Separator 1 is shown in detail in figure 2 and comprises a vessel 2 with a peripheral wall 4, a bottom 6 and an upper side 8. Provided in peripheral wall 4 is a fluid supply opening 10 through which fluid supply conduit 12 extends. Fluid discharge conduit 18 extends through a fluid discharge opening 16 arranged in peripheral wall 4.

Separator 1 is provided on an upper side 8 with a gas discharge opening 22 on which is arranged a degassing valve 24, for instance in the form of a float vent. Bottom 6 is provided with a solid particle discharge opening 26 which in the shown embodiment comprises a solid particle collection zone 34 closable with a shut-off valve 28.

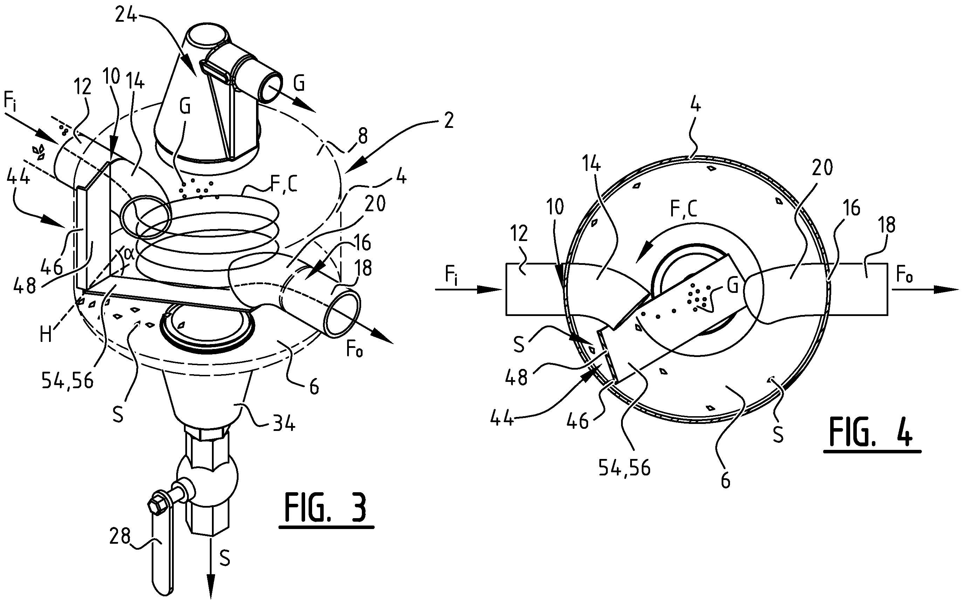

Separator 1 is shown cut-away in the perspective view of figure 3. Fluid supply conduit 12 extends through the fluid supply opening 10 arranged in the peripheral wall to a position within the volume of vessel 2 and comprises inside the vessel a supply pipe bend 14 which deflects the ingoing fluid flow F in the peripheral direction of vessel 2. Pipe bend 14 hereby facilitates startup of a circulation C which creates a vortex in the fluid. The circulation of the fluid flow F exerts a centrifugal action on the relatively heavy solid particles S, which thereby displace in the outward direction toward peripheral wall 4 of vessel 2. The centrifugal action also causes a lower pressure at and close to the central axis, i.e. the rotational symmetry axis of vessel 2, whereby gas bubbles G present in the fluid will move toward the central axis of vessel 2.

The fluid circulates through the vortex in vessel 2 before leaving vessel 2 via fluid discharge opening 16. In order to create the vortex the fluid supply opening 10 is provided with a fluid supply conduit 12 extending to a position within the volume of vessel 2 and comprising within the volume enclosed by vessel 2 a supply pipe bend 14 which deflects the fluid flow F in the peripheral direction of vessel 2. The direction in which supply pipe bend 14 curves thus corresponds to the orientation direction of the vortex.

Further provided is a fluid discharge conduit 18 which extends through fluid discharge opening 16 and comprises within the volume enclosed by vessel 2 a discharge pipe bend 20 having a discharge inlet opening 21. This discharge pipe bend 20 is oriented downward to a limited extent in the direction of bottom 6 of vessel 2 and is preferably curved in the opposite peripheral direction to supply pipe bend 14. When discharge pipe bend 20 is curved in a direction which as seen in peripheral direction of vessel 2 is opposite to the direction in which supply pipe bend 14 is curved, discharge pipe bend 20 is located in optimal orientation for receiving and discharging the fluid flow F from vessel 2. This is because the fluid flow F circulates in a direction imposed by supply pipe bend 14 and thereby arrives in optimal manner close to discharge pipe bend 20.

The relatively heavy particles S which have been displaced in outward direction toward inner wall 4 of vessel 2 by the centrifugal action will eventually collide with strip part 46 of capturing member 44, after which they will drop downward to bottom 6 under the influence of gravity.

Capturing member 44 further comprises a plate part 48 which in the shown embodiment is formed integrally with strip part 46 and is arranged at a slight angle relative to peripheral wall 4 so that, together with the inner wall 4 of vessel 2, strip part 46 and wall 48 enclose a capture volume in which heavy particles S are captured before they descend to bottom 6.

Further provided in the vessel is a screen member 54 in the form of a plate part 56 which ensures that the circulating C fluid flow F does not propagate all the way to bottom 6. Screen member 54 functions as a separation for a high-flow zone thereabove and a low-flow zone thereunder, i.e. between screen member 54 and bottom 6 of vessel 2. Once they have arrived in the low-flow zone below screen member 54, solid particles S will as a result no longer swirl upward, and thus remain there. The fluid flow F leaves vessel 2 via the downward oriented discharge pipe bend 20 and fluid flow discharge conduit 18 extending through the fluid discharge opening 16 arranged in peripheral wall 4.

In the embodiment of a relatively narrow plate part 56 shown in figure 3 screen member 54 is arranged inclining at an angle α relative to the horizontal plane H - in mounted operative mode of separator 1 - so that the circulating fluid flow F is deflected in upward direction. The horizontal plane H in mounted operative mode corresponds to the transverse direction of vessel 2 of separator 1. This angle α can vary from 1°-16° depending on velocities in the fluid.

Screen member 54 extends away from capturing member 44 to a determined distance beyond the central axis of vessel 2, so that it also provides a screening against the suctioning action of discharge pipe bend 20. Thus prevented is that solid particles S present in the low-flow zone below screen member 54 are drawn in and swirl up from bottom 6.

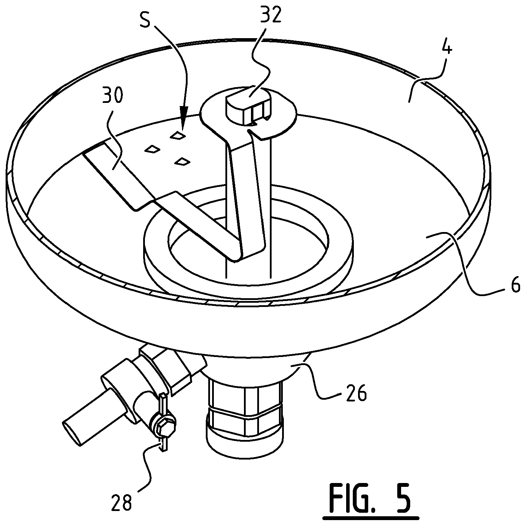

It is noted that, if in an alternative embodiment (not shown) screen member 54 extends further beyond the central axis of vessel 2 , the direction of inclination beyond the central axis reverses so that the circulating flow undergoes an upward deflection on both sides of the central axis because of the angle of inclination of screen member 54. It is noted that the central axis of vessel 2 in this application refers to the longitudinal direction in which central guide 32 (figures 5-7) extends.

Vessel 2 is provided on the underside with a solid particle collection zone 34 and a shut-off valve 28 is provided with which the solid particles S can be periodically removed from vessel 2. Figure 4 shows figure 3 in a top view. The solid particles S present on bottom 6 can be scraped off bottom 6 using a scraper member 30 which is rotatable R around a central guide 32, after which they will accumulate in a solid particle collection zone 34.

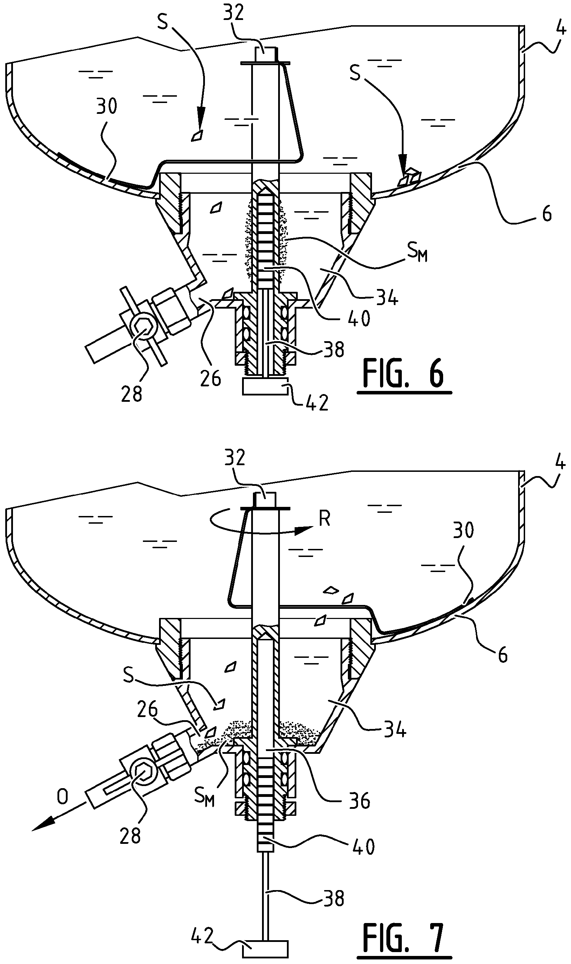

In a particularly advantageous embodiment central guide 32 takes a hollow form and is provided with a recess 36 through which a pin 38 extends. Pin 38 is provided with a magnet 40, and a knob 42 is arranged on the other outer end of pin 38. In the pushed inward position of pin 38 shown in figure 6 magnet 40 is located substantially within the solid particle collection zone 34 and will attract magnetizable solid particles S, such as magnetite, and cause them to accumulate against the outer wall of central guide 32. When pin 38 is however displaced downward in recess 36, these magnetizable particles S_{M} will come to lie loosely in the solid particle collection zone 34 and, when shut-off valve 28 is opened, can be discharged in the discharge direction O together with the other solid particles S. It is noted that this magnet 40 can also be applied to separators lacking a capturing member 44.

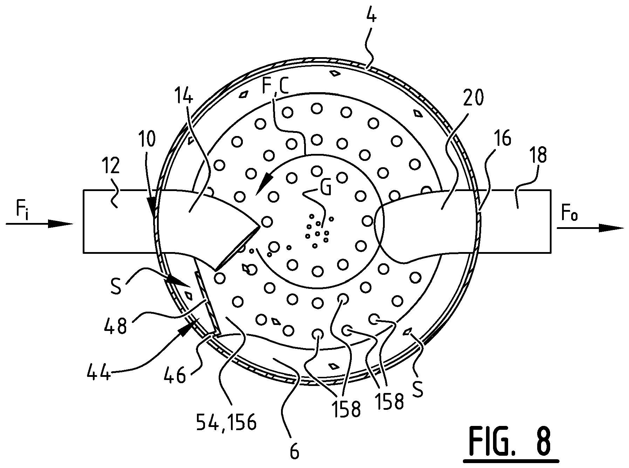

The alternative embodiment shown in the top view of figure 8 comprises a screen member 54 in the form of a disc 156 which extends to a position some distance from peripheral wall 4 of vessel 2. The clearance between disc 156 and peripheral wall 4 makes it possible for solid particles S to drop downward therebetween. The clearance on the other hand ensures that throughflow remains guaranteed. Optional perforations 158 can be provided so that solid particles S can drop therethrough to the low-flow zone below disc 156.

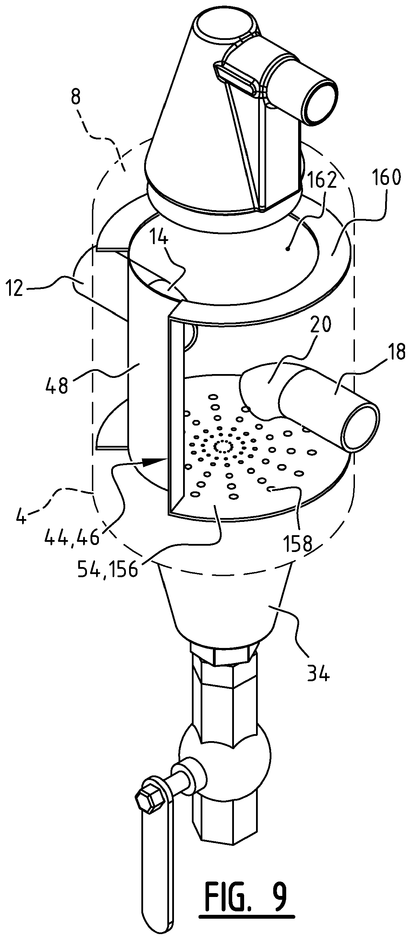

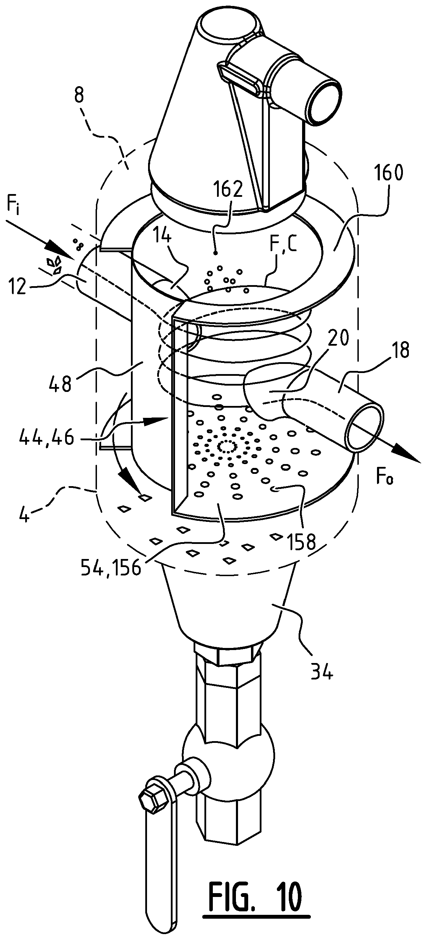

The alternative embodiment shown in the perspective view of figures 9 and 10 once again comprises a screen member 54 in the form of a disc 156. Disc 156 extends in this embodiment substantially as far as peripheral wall 4 of vessel 2 and leaves an opening clear between plate part 48 and peripheral wall 4 through which solid particles which collide with capturing member 44 can drop downward. In the shown embodiment plate part 48 has a curvature whereby plate part 48 runs substantially parallel to peripheral wall 4 of vessel 2, but can alternatively also be arranged such that plate part 48 comes to lie increasingly further from peripheral wall 4 and away from strip part 46.

An upper screen 160 with a passage opening 162 is provided between fluid supply opening 10 and upper side 8 of vessel 2. The circulation C of fluid flow F is enhanced by upper screen 160, i.e. upper screen 160 contributes toward the generation of a vortex. Passage opening 162 arranged in upper screen 160 serves to ensure a free passage for gas bubbles to upper side 8 of vessel 2. In the shown embodiment upper screen 160 is a ring extending inward from peripheral wall 4 of vessel 2 and connecting to strip part 46 of capturing member 44.

Capturing member 44, screen member 54 in the form of disc 156, and upper screen 160 preferably form a monolithic unit.

Different aspects of the invention can also be implemented separately. The measures of a separator with a guide which extends in the solid particle collection zone and through which a magnet is displaceable between an attracting position and a release position, as described above, can thus also be implemented independently, i.e. separately of the measure that the separator comprises a capturing member extending in height direction along the peripheral wall of the vessel.

## Claims

1. Separator (1) configured to separate at least solid material particles from a fluid flow in a heating or cooling system, comprising:
- a closed vessel (2) comprising a peripheral wall (4), a bottom (6) and an upper side (8);
- a fluid supply opening (10) which is arranged in the vessel and to which a fluid supply conduit (12) is connectable;
- a fluid discharge opening (16) which is arranged in the vessel and to which a fluid discharge conduit (18) is connectable; and
- wherein the fluid supply conduit (12) extends through the fluid supply opening (10) and comprises within the volume enclosed by the vessel (2) a supply pipe bend (14) which deflects the fluid flow (F) in a first peripheral direction of the vessel (2);
**characterized in that**
- the fluid supply opening (10) and fluid discharge opening (16) are arranged at positions substantially opposite each other in the peripheral wall, wherein the fluid supply conduit (12) and fluid discharge conduit (18) are connectable substantially in a straight line;
- it comprises a capturing member (44) extending in height direction along the peripheral wall (4) of the vessel (2), wherein the capturing member (44) comprises a strip part (46) arranged on or close to the peripheral wall (4) and extending some distance inward into the vessel from the peripheral wall (4); and
- the fluid discharge conduit (18) extends through the fluid discharge opening (16) and comprises within the volume enclosed by the vessel (2) a discharge pipe bend (20) having a discharge inlet opening (21) oriented downward to a limited extent in the direction of the bottom (6) of the vessel (2).

2. Separator as claimed in claim 1, wherein the supply pipe bend is curved in the first peripheral direction and deflects the fluid flow in this first peripheral direction of the vessel, and wherein the discharge pipe bend is curved in a second peripheral direction opposite to the first peripheral direction of the supply pipe bend and the fluid flow.

3. Separator as claimed in claim 1 or 2, wherein the capturing member further comprises a plate part connecting to the side of the strip part remote from the peripheral wall; and
- wherein the plate part is preferably arranged extending obliquely from the peripheral wall away from the strip part.

4. Separator as claimed in any of the foregoing claims, further comprising a screen member arranged some distance above the bottom of the vessel and comprising a substantially lying plate part.

5. Separator as claimed in claim 4, wherein the screen member is arranged obliquely in the vessel as seen in the peripheral direction, wherein it deflects the fluid flow in upward direction; and
- wherein the screen member is preferably disposed at an angle α in the range of 5°-35° relative to the transverse direction of the vessel.

6. Separator as claimed in claim 5, wherein the screen member extends inward from a position close to the capturing member to at least one of:
- a position close to the central axis of the vessel; and
- a maximum of 25% of the radius beyond the central axis of the vessel.

7. Separator as claimed in claim 4, wherein the screen member substantially comprises a disc, wherein an opening is provided at least between the plate part connected to the capturing member and the peripheral wall; and
- wherein the disc preferably extends to a position some distance from the peripheral wall of the vessel.

8. Separator as claimed in any of the claims 3-7, wherein the capturing member and the screen member are arranged substantially connecting to each other, and wherein preferably:
- the capturing member and the screen member are preferably connected to each other; and/or
- the capturing member and the screen member form a monolithic unit.

9. Separator as claimed in any of the claims 3-8, wherein an upper screen with a passage opening is provided between the fluid supply opening and the upper side of the vessel.

10. Separator as claimed in claim 9, wherein the capturing member and the upper screen are arranged substantially connecting to each other, and wherein preferably:
- the capturing member and the upper screen are connected to each other; and/or
- the capturing member and the upper screen form a monolithic unit.

11. Separator as claimed in any of the foregoing claims, further comprising a solid particle discharge opening which is arranged in or close to the bottom and through which solid particles collected on or close to the bottom can be discharged, and wherein the bottom is preferably provided with a solid particle collection zone in which the solid particle discharge opening is arranged.

12. Separator as claimed in claim 11, comprising:
- a guide which extends in the solid particle collection zone and through which a magnet is displaceable between an attracting position and a release position,
- wherein in the attracting position the magnet is located substantially within the solid particle collection zone and attracts magnetizable solid particles against the guide; and
- wherein in the release position the magnet is located at least partially in the guide and substantially outside the solid particle collection zone, and the magnetizable solid particles are removed substantially so far from the magnet that they are no longer attracted against the guide and drop into the solid particle collection zone.

13. Separator as claimed in claim 12, lacking a capturing member extending in height direction along the peripheral wall of the vessel.

14. Method for separating solid particles from a fluid flow using a separator (1) according to any of the foregoing claims, comprising the steps of:
- generating a circulating fluid flow in a vessel (2) between a fluid supply opening (10) and a fluid discharge opening (16), wherein the fluid supply opening (10) and the fluid discharge opening (16) are arranged at positions substantially opposite each other in a peripheral wall (4) of the vessel (2), wherein a fluid supply conduit (12) extends through the fluid supply opening (10) and comprises within the volume enclosed by the vessel (2) a supply pipe bend (14) which deflects the fluid flow in a first peripheral direction of the vessel (2), and wherein a fluid discharge conduit (18) extends through the fluid discharge opening (16) and comprises within the volume enclosed by the vessel (2) a discharge pipe bend (20) having a discharge inlet opening (21) oriented downward to a limited extent in the direction of the bottom (6) of the vessel (2);
- capturing solid particles, displaced outward by centrifugal action to a position close to the peripheral wall (4) of the vessel (2), using a capturing member (44) extending in height direction along the peripheral wall (4); and
- collecting close to a bottom (6) of the vessel (2) the solid particles captured by the capturing member (44).

15. Method as claimed in claim 14, wherein the supply pipe bend curves in the first peripheral direction and thereby deflects the fluid flow in this first peripheral direction of the vessel, and wherein the discharge pipe bend curves in a second peripheral direction, wherein the second peripheral direction is opposite to the first peripheral direction of the supply pipe bend and the fluid flow.

## Patentansprüche

1. Abscheidungsvorrichtung (1), die konfiguriert ist, um wenigstens Feststoffpartikel aus einer Fluidströmung in einem Heiz- oder Kühlsystem zu entfernen, die aufweist:
- ein geschlossenes Gefäß (2), das eine Umfangswand (4), einen Boden (6) und eine Oberseite (8) aufweist;
- eine Fluidzuführungsöffnung (10), die in dem Gefäß angeordnet ist und mit der ein Fluidzuführungskanal (12) verbindbar ist;
- eine Fluidabgabeöffnung (16), die in dem Gefäß angeordnet ist und mit der ein Fluidabgabekanal (18) verbindbar ist; und
- wobei der Fluidzuführungskanal (12) sich durch die Fluidzuführungsöffnung (10) erstreckt und innerhalb des von dem Gefäß (2) umschlossenen Volumens eine Zuführungsleitungsbiegung (14) aufweist, welche die Fluidströmung (F) in eine erste Umfangsrichtung des Gefäßes (2) ablenkt;
**dadurch gekennzeichnet, dass**
- die Fluidzuführungsöffnung (10) und die Fluidabgabeöffnung (16) an zueinander entgegengesetzten Positionen in der Umfangswand angeordnet sind, wobei der Fluidzuführungskanal (12) und der Fluidabgabekanal im Wesentlichen in einer geraden Linie verbindbar sind;
- sie ein Einfangelement (44) aufweist, das sich in einer Höhenrichtung entlang der Umfangswand (4) des Gefäßes (2) erstreckt, wobei das Einfangelement (44) einen Streifenteil (46) aufweist, der auf oder nahe der Umfangswand (4) angeordnet ist und sich von der Umfangswand (4) eine gewisse Strecke in das Gefäß einwärts erstreckt; und
- der Fluidabgabekanal (18) sich durch die Fluidabgabeöffnung (16) erstreckt und innerhalb des von dem Gefäß (2) umschlossenen Volumens eine Abgabeleitungsbiegung (20) mit einer Abgabeeinlassöffnung (21) aufweist, die in einem begrenzten Ausmaß in der Richtung des Bodens (6) des Gefäßes (2) nach unten orientiert ist.

2. Abscheidungsvorrichtung nach Anspruch 1, wobei die Zuführungsleitungsbiegung in der ersten Umfangsrichtung gekrümmt ist und die Fluidströmung in diese erste Umfangsrichtung des Gefäßes ablenkt, und wobei die Abgabeleitungsbiegung in eine zweite Umfangrichtung entgegengesetzt zu der ersten Umfangsrichtung der Zuführungsrohrbiegung und der Fluidströmung gekrümmt ist.

3. Abscheidungsvorrichtung nach Anspruch 1 oder 2, wobei das Einfangelement ferner einen Plattenteil aufweist, der mit der Seite des Streifenteils entfernt von der Umfangswand verbindet; und
- wobei der Plattenteil vorzugsweise sich schräg von der Umfangswand weg von dem Streifenteil erstreckend angeordnet ist.

4. Abscheidungsvorrichtung nach einem der vorstehenden Ansprüche, die ferner ein Siebelement aufweist, das in etwas Abstand über dem Boden des Gefäßes angeordnet ist und einen im Wesentlichen liegenden Plattenteil aufweist.

5. Abscheidungsvorrichtung nach Anspruch 4, wobei das Siebelement in der Umfangsrichtung gesehen schräg in dem Gefäß angeordnet ist, wobei es die Fluidströmung in die Aufwärtsrichtung ablenkt; und
- wobei das Siebelement vorzugsweise in einem Winkel in dem Bereich von 5° - 35° relativ zu der Querrichtung des Gefäßes angeordnet ist.

6. Abscheidungsvorrichtung nach Anspruch 5, wobei das Siebelement sich von einer Position nahe dem Einfangelement zu wenigstens einem der folgenden einwärts erstreckt:
- einer Position nahe der Mittelachse des Gefäßes; und
- einem Maximum von 25% des Radius über die Mittelachse des Gefäßes hinaus.

7. Abscheidungsvorrichtung nach Anspruch 4, wobei das Siebelement im Wesentlichen eine Scheibe aufweist, wobei wenigstens zwischen dem Plattenteil, der mit dem Einfangelement verbunden ist, und der Umfangswand eine Öffnung bereitgestellt ist; und
- wobei die Scheibe sich vorzugsweise zu einer Position in etwas Abstand von der Umfangswand des Gefäßes erstreckt.

8. Abscheidungsvorrichtung nach einem der Ansprüche 3 bis 7, wobei das Einfangelement und das Siebelement im Wesentlichen miteinander verbindend angeordnet sind, wobei vorzugsweise:
- das Einfangelement und das Siebelement miteinander verbunden sind, und/oder
- das Einfangelement und das Siebelement eine monolithische Einheit bilden.

9. Abscheidungsvorrichtung nach einem der Ansprüche 3 - 8, wobei ein oberes Sieb mit einer Durchgangsöffnung zwischen der Fluidzuführungsöffnung und der Oberseite des Gefäßes bereitgestellt ist.

10. Abscheidungsvorrichtung nach Anspruch 9, wobei das Einfangelement und das obere Sieb im Wesentlichen miteinander verbindend angeordnet sind, und wobei vorzugsweise:
- das Einfangelement und das obere Sieb miteinander verbunden sind; und/oder
- das Einfangelement und das obere Sieb eine monolithische Einheit bilden.

11. Abscheidungsvorrichtung nach einem der vorhergehenden Ansprüche, die ferner eine Feststoffpartikel-Abgabeöffnung aufweist, die in oder nahe dem Boden angeordnet ist und durch die Feststoffpartikel, die auf oder nahe dem Boden gesammelt werden, abgegeben werden können, und wobei der Boden vorzugsweise mit einer Feststoffpartikelsammelzone versehen ist, in der die Feststoffpartikel-Abgabeöffnung angeordnet ist.

12. Abscheidungsvorrichtung nach Anspruch 11, die aufweist:
- eine Führung, die sich in der Feststoffpartikel-Sammelzone erstreckt und durch die ein Magnet zwischen einer Anziehungsposition und einer Löseposition verschiebbar ist,
- wobei der Magnet in der Anziehungsposition im Wesentlichen innerhalb der Feststoffpartikel-Sammelzone angeordnet ist und magnetisierbare Feststoffpartikel gegen die Führung anzieht; und
- wobei der Magnet sich in der Löseposition wenigstens teilweise in der Führung und im Wesentlichen außerhalb der Feststoffpartikel-Sammelzone befindet und die magnetisierbaren Feststoffpartikel im Wesentlich so weit von dem Magnet entfernt werden, dass sie nicht mehr gegen die Führung angezogen werden, und in die Feststoffpartikel-Sammelzone fallen.

13. Abscheidungsvorrichtung nach Anspruch 12, der ein Einfangelement, das sich in der Höhenrichtung entlang der Umfangswand des Gefäßes erstreckt, fehlt.

14. Verfahren zum Abscheiden von Feststoffpartikeln aus einer Fluidströmung unter Verwendung einer Abscheidungsvorrichtung (1) nach einem der vorhergehenden Ansprüche, das die folgenden Schritte aufweist:
- Erzeugen einer zirkulierenden Fluidströmung in einem Gefäß (2) zwischen einer Fluidzuführungsöffnung (10) und einer Fluidabgabeöffnung (16), wobei die Fluidzuführungsöffnung (10) und die Fluidabgabeöffnung (16) an im Wesentlichen zueinander entgegengesetzten Positionen in einer Umfangswand (4) des Gefäßes (2) angeordnet sind, wobei ein Fluidzuführungskanal (12) sich durch die Fluidzuführungsöffnung (10) erstreckt und innerhalb des von dem Gefäß (2) umschlossenen Volumens eine Zuführungsleitungsbiegung (14) aufweist, welche die Fluidströmung in eine erste Umfangsrichtung des Gefäßes (2) ablenkt, und wobei ein Fluidabgabekanal (18) sich durch die Fluidabgabeöffnung (16) erstreckt und innerhalb des von dem Gefäß (2) umschlossenen Volumens eine Abgabeleitungsbiegung (20) mit einer Abgabeeinlassöffnung (21) aufweist, die in einem begrenzten Ausmaß in der Richtung des Bodens (6) des Gefäßes (2) nach unten orientiert ist;
- Einfangen von Feststoffpartikeln, die durch eine Zentrifugalwirkung in eine Position nahe der Umfangswand (4) des Gefäßes (2) auswärts verschoben werden, unter Verwendung eines Einfangelements (44), das sich in einer Höhenrichtung entlang der Umfangswand (4) erstreckt; und
- Sammeln der von dem Einfangelement (44) eingefangenen Feststoffpartikel nahe einem Boden (6) des Gefäßes (2).

15. Verfahren nach Anspruch 14, wobei die Zuführungsleitungsbiegung in der ersten Umfangsrichtung gekrümmt ist und dadurch die Fluidströmung in diese erste Umfangsrichtung des Gefäßes ablenkt, und wobei die Abgabeleitungsbiegung in eine zweite Umfangrichtung gekrümmt ist, wobei die zweite Umfangsrichtung entgegengesetzt zu der ersten Umfangsrichtung der Zuführungsrohrbiegung und der Fluidströmung ist.

## Revendications

1. Séparateur (1) configuré pour séparer au moins des particules de matières solides d'un flux de fluide dans un système de chauffage ou de refroidissement, comprenant :
- un réservoir fermé (2) comprenant une paroi périphérique (4), un fond (6) et une face supérieure (8) ;
- une ouverture d'alimentation en fluide (10) qui est agencée dans le réservoir et à laquelle un conduit d'alimentation en fluide (12) peut être raccordé ;
- une ouverture d'évacuation de fluide (16) qui est agencée dans le réservoir et à laquelle un conduit d'évacuation de fluide (18) peut être raccordé ; et
- dans lequel le conduit d'alimentation en fluide (12) s'étend à travers l'ouverture d'alimentation en fluide (10) et comprend à l'intérieur du volume délimité par le réservoir (2) un coude de tube d'alimentation (14) qui dévie le flux de fluide (F) dans une première direction périphérique du réservoir (2) ;
**caractérisé en ce que**
- l'ouverture d'alimentation en fluide (10) et l'ouverture d'évacuation de fluide (16) sont agencées au niveau de positions sensiblement opposées l'une à l'autre dans la paroi périphérique, dans lequel le conduit d'alimentation en fluide (12) et le conduit d'évacuation de fluide (18) peuvent être raccordés sensiblement en une ligne droite ;
- il comprend un élément de capture (44) s'étendant dans une direction de la hauteur le long de la paroi périphérique (4) du réservoir (2), dans lequel l'élément de capture (44) comprend une pièce de type bande (46) agencée sur ou à proximité de la paroi périphérique (4) et s'étendant sur une certaine distance vers l'intérieur dans le réservoir à partir de la paroi périphérique (4) ; et
- le conduit d'évacuation de fluide (18) s'étend à travers l'ouverture d'évacuation de fluide (16) et comprend à l'intérieur du volume délimité par le réservoir (2) un coude de tube d'évacuation (20) ayant une ouverture d'entrée d'évacuation (21) orientée vers le bas sur une étendue limitée dans la direction du fond (6) du réservoir (2).

2. Séparateur selon la revendication 1, dans lequel le coude de tube d'alimentation est incurvé dans la première direction périphérique et dévie le flux de fluide dans cette première direction périphérique du réservoir, et dans lequel le coude de tube d'évacuation est incurvé dans une seconde direction périphérique opposée à la première direction périphérique du coude de tube d'alimentation et du flux de fluide.

3. Séparateur selon la revendication 1 ou 2, dans lequel l'élément de capture comprend en outre une pièce de type plaque se raccordant à la face de la pièce de type bande à distance de la paroi périphérique ; et
- dans lequel la pièce de type plaque est de préférence agencée s'étendant obliquement à partir de la paroi périphérique en s'éloignant de la pièce de type bande.

4. Séparateur selon l'une quelconque des revendications précédentes, comprenant en outre un élément d'écran agencé sur une certaine distance au-dessus du fond du réservoir et comprenant une pièce de type plaque sensiblement couchée.

5. Séparateur selon la revendication 4, dans lequel l'élément d'écran est agencé obliquement dans le réservoir tel que vu dans la direction périphérique, dans lequel il dévie le flux de fluide dans une direction vers le haut ; et
- dans lequel l'élément d'écran est de préférence disposé à un angle α dans la plage de 5° à 35° par rapport à la direction transversale du réservoir.

6. Séparateur selon la revendication 5, dans lequel l'élément d'écran s'étend vers l'intérieur d'une position proche de l'élément de capture à au moins l'un de :
- une position proche de l'axe central du réservoir ; et
- un maximum de 25 % du rayon au-delà de l'axe central du réservoir.

7. Séparateur selon la revendication 4, dans lequel l'élément d'écran comprend sensiblement un disque, dans lequel une ouverture est prévue au moins entre la pièce de type plaque raccordée à l'élément de capture et la paroi périphérique ; et
- dans lequel le disque s'étend de préférence jusqu'à une position à une certaine distance de la paroi périphérique du réservoir.

8. Séparateur selon l'une quelconque des revendications 3 à 7, dans lequel l'élément de capture et l'élément d'écran sont agencés se raccordant sensiblement l'un à l'autre, et dans lequel de préférence :
- l'élément de capture et l'élément d'écran sont de préférence raccordés l'un à l'autre ; et/ou
- l'élément de capture et l'élément d'écran forment une unité monolithique.

9. Séparateur selon l'une quelconque des revendications 3 à 8, dans lequel un écran supérieur doté d'une ouverture de passage est prévu entre l'ouverture d'alimentation en fluide et la face supérieure du réservoir.

10. Séparateur selon la revendication 9, dans lequel l'élément de capture et l'écran supérieur sont agencés se raccordant sensiblement l'un à l'autre, et dans lequel de préférence :
- l'élément de capture et l'écran supérieur sont raccordés l'un à l'autre ; et/ou
- l'élément de capture et l'écran supérieur forment une unité monolithique.

11. Séparateur selon l'une quelconque des revendications précédentes, comprenant en outre une ouverture d'évacuation de particules solides qui est agencée dans ou à proximité du fond et à travers laquelle les particules solides collectées sur ou à proximité du fond peuvent être évacuées, et dans lequel le fond est de préférence doté d'une zone de collecte de particules solides dans laquelle l'ouverture d'évacuation de particules solides est agencée.

12. Séparateur selon la revendication 11, comprenant :
- un guide qui s'étend dans la zone de collecte de particules solides et à travers lequel un aimant peut être déplacé entre une position d'attraction et une position de libération,
- dans lequel dans la position d'attraction l'aimant est situé sensiblement à l'intérieur de la zone de collecte de particules solides et attire les particules solides magnétisables contre le guide ; et
- dans lequel dans la position de libération l'aimant est situé au moins partiellement dans le guide et sensiblement en dehors de la zone de collecte de particules solides, et les particules solides magnétisables sont retirées sensiblement à l'écart de l'aimant, suffisamment pour qu'elles ne soient plus attirées contre le guide et chutent dans la zone de collecte de particules solides.

13. Séparateur selon la revendication 12, ne comportant pas d'élément de capture s'étendant dans une direction de la hauteur le long de la paroi périphérique du réservoir.

14. Procédé de séparation de particules solides d'un flux de fluide utilisant un séparateur (1) selon l'une quelconque des revendications précédentes, comprenant les étapes de :
- génération d'un flux de fluide en circulation dans un réservoir (2) entre une ouverture d'alimentation en fluide (10) et une ouverture d'évacuation de fluide (16), dans lequel l'ouverture d'alimentation en fluide (10) et l'ouverture d'évacuation de fluide (16) sont agencées au niveau de positions sensiblement opposées l'une à l'autre dans une paroi périphérique (4) du réservoir (2), dans lequel un conduit d'alimentation en fluide (12) s'étend à travers l'ouverture d'alimentation en fluide (10) et comprend à l'intérieur du volume délimité par le réservoir (2) un coude de tube d'alimentation (14) qui dévie le flux de fluide dans une première direction périphérique du réservoir (2), et dans lequel un conduit d'évacuation de fluide (18) s'étend à travers l'ouverture d'évacuation de fluide (16) et comprend à l'intérieur du volume délimité par le réservoir (2) un coude de tube d'évacuation (20) ayant une ouverture d'entrée d'évacuation (21) orientée vers le bas sur une étendue limitée dans la direction du fond (6) du réservoir (2) ;
- capture des particules solides, déplacées vers l'extérieur par une action centrifuge jusqu'à une position proche de la paroi périphérique (4) du réservoir (2), en utilisant un élément de capture (44) s'étendant dans une direction de la hauteur le long de la paroi périphérique (4) ; et
- collecte à proximité d'un fond (6) du réservoir (2) des particules solides capturées par l'élément de capture (44).

15. Procédé selon la revendication 14, dans lequel le coude de tube d'alimentation s'incurve dans la première direction périphérique et dévie ainsi le flux de fluide dans cette première direction périphérique du réservoir, et dans lequel le coude de tube d'évacuation s'incurve dans une seconde direction périphérique, dans lequel la seconde direction périphérique est opposée à la première direction périphérique du coude de tube d'alimentation et au flux de fluide.
